# EUROPÄISCHE PATENTSCHRIFT

(11) **EP 3 205 783 B1**
(45) Veröffentlichungstag und Bekanntmachung des Hinweises auf die Patenterteilung: **01.07.2020**
(21) Anmeldenummer: 16002683.7
(22) Anmeldetag: 19.12.2016
(51) Int. Cl.: E03C 1/084, E03C 1/10, F16K 15/02, F16K 15/06, G05D 7/01

(54) **SANITÄRES RÜCKFLUSSVERHINDERERVENTIL**
SANITARY BACKFLOW PREVENTION VALVE
ANTI-REFOULEUR SANITAIRE

(30) Priorität: 10.02.2016 DE 202016000833 U
(43) Veröffentlichungstag der Anmeldung: 16.08.2017
(73) Patentinhaber: Neoperl GmbH, 79379 Müllheim (DE)
(72) Erfinder: Fangmeier Martin, 79424 Auggen (DE)
(74) Vertreter: Börjes-Pestalozza, Henrich

(56) Entgegenhaltungen:
- EP-A1- 1 217 271
- DE-U1-202005 016 046
- FR-A1- 2 620 785
- GB-A- 2 105 012
- US-A- 4 712 575
- US-A- 5 176 171

## Beschreibung

Die Erfindung betrifft ein sanitäres Rückflussverhindererventil gemäß dem Inhalt von Anspruch 1.

Der Einsatz solcher Ventile ist bei Sanitärarmaturen teilweise gesetzlich vorgeschrieben, teilweise aus funktionalen Gründen notwendig. Insbesondere verhindern diese Ventile, dass Schmutzwasser zurück in die Hauswasserleitung gesaugt werden kann. Es handelt sich dabei im Prinzip um ein in vielen Bereichen der Technik eingesetztes Rückschlagventil, das den Fluss eines Fluids durch eine Leitung nur in eine Richtung freigibt und das bei einer Strömungsumkehr den Durchfluss sperrt. Für den Bereich der Sanitärarmaturen ist eine sehr kleine Bauweise möglich, sodass die bekannten Rückflussverhindererventile problemlos direkt in eine wasserführende Leitung oder in eine Bohrung in einer Sanitärarmatur eingesetzt werden können. Damit erfüllen sie ihre Funktion, ohne optisch störend zu wirken.

Mit der kleinen Bauweise und der Platzierung in engen Leitungsquerschnitten verbunden ist jedoch der Nachteil, dass die bekannten Rückflussverhindererventile für die Wartung schwer zugänglich sind, beispielsweise um Verkalkungen zu lösen. In dieser schwer zugänglichen Position bietet die Stirnfläche des Ventils keinerlei Eingriffsmöglichkeiten. Eine Entnahme ist teilweise nur möglich, indem mit einem Schraubendreher oder einem ähnlichen Werkzeug in den Fließkanal des Ventils eingestochen wird und dieses dann herausgehebelt wird, wobei es in der Regel jedoch zerstört wird.

Aus der DE 20 2005 016 046 U1 ist ein sanitäres Ruckflussverhindererventil der eingangs erwähnten Art mit einem als Basiselement vorgesehenen Einsetzgehäuse vorbekannt, das zum Einsatz in eine Ventilaufnahme eines Sanitärarmaturenkörpers oder einer wasserführenden Leitung bestimmt ist. Im Einsetzgehäuse ist ein innerer Fließkanal vorgesehen, der sich zwischen einer stromaufwärts zu richtenden Stirnseite und einer stromabwärts zu richtenden Stirnseite erstreckt und der sich an einem Ventilsitz erweitert. Im Fließkanal ist ein Ventilelement zwischen einer Offenstellung und einer Schließstellung bewegbar, das eine Dichtfläche zur Anlage an dem Dichtsitz hat. Stromabwärts am Ventilelement ist ein Führungszapfen einstückig angeformt, der zur Führung des Ventilelements in einem Führungslager im Einsetzgehäuse verschieblich geführt ist. Während der Führungszapfen in Schließstellung des vorbekannten Rückflussverhindererventils unerreichbar im Führungslager angeordnet ist, steht der Führungszapfen in Offenstellung über die zugeordnete Führungsöffnung des Einsetzgehäuses hinaus mit einem Zapfen-Fortsatz vor. An diesem Zapfen-Fortsatz ist das vorbekannte Rückflussverhindererventil weder manuell noch mit einem geeigneten Werkzeug zu erfassen, weil dieser Zapfen-Fortsatz nur in der vom Wasser durchströmten Offenstellung vorsteht und weil der Zapfen-Fortsatz in der Schließstellung wieder in die Führungsöffnung eintaucht und an seinem Zapfen-Außenumfang empfindlich gegen werkzeugbedingte Beschädigungen ist.

Aus der US 5 176 171 A kennt man bereits ein Rückflussverhindererventil mit einem als Ventilgehäuse ausgebildeten Basiselement, das an beiden Stirnenden des Ventilgehäuses innenseitig jeweils ein Innengewinde trägt, um zwei benachbarte Rohrabschnitte über das Ventilgehäuse miteinander zu verbinden und um das Ventilgehäuse in die Wasserleitung zwischenzuschalten. Da das Ventilgehäuse des aus US 5 176 171 A vorbekannten Rückflussverhindererventils somit praktisch als Rohrverbinder zwischen zwei benachbarten Rohrabschnitten angeordnet ist, ist das Ventilgehäuse dieses vorbekannten Rückflussverhindererventils nicht zum Einsatz in einer Ventilaufnahme eines Sanitärarmaturenkörpers oder einer Wasserführung bestimmt. Da das Ventilgehäuse zwei benachbarte Rohrabschnitte miteinander verbindet, besteht auch nicht die Gefahr, dass das Ventilgehäuse unbeabsichtigt nicht mehr von einem dieser Leitungsabschnitte separiert werden könnte.

Das aus US 5 176 171 A vorbekannte Rückflussverhindererventil hat des Weiteren ein Ventilelement, das eine Dichtfläche zur Anlage an dem Ventilsitz sowie einen sich hier zum stromaufwärts gerichteten Ende erstreckenden Führungszapfen zur Führung des Ventilelements in einem Führungslager des Basiselements aufweist. An dem kegelförmigen Ventilelement steht stromaufwärts ein stabförmiger Zapfen-Fortsatzvor, der im Zustand ohne Wasserdruck über die stromaufwärts zu richtende Stirnseite des Ventilelements hinaus ragt. Der zur Führung des Ventilelements bestimmte und zylindrisch ausgebildete Führungszapfen des vorbekannten Rückflussverhindererventils ist in dem Führungslager geführt, das einen formangepassten kreisrunden Führungsquerschnitt hat. Da der Führungszapfen vergleichsweise lang und in dem kreisrunden Führungslager geführt ist, besteht die Gefahr, dass Vibrationen am Ventilelement sich durch eine Geräuschbildung auch an dem im Führungslager anschlagenden Führungszapfen sowie durch eine bewegungshemmende erhöhte Reibung bemerkbar machen können.

Aus der EP 1 217 271 A1 ist ein Rückflussverhindererventil vorbekannt, das ebenfalls ein zwischen zwei Rohrabschnitten montierbares Ventilgehäuse hat. Das Ventilgehäuse ist dazu ebenfalls als hülsenförmiger Rohrverbinder ausgebildet, der am Hülseninnenumfang der Gehäusestirnenden jeweils ein zum Anschluss an einer benachbarten Rohrleitung bestimmtes Innengewinde trägt. Im Gehäuseinneren des Ventilgehäuses ist ein zentraler Ventilzapfen vorgesehen, auf dem ein ringförmiger Ventilkörper zwischen einer Offenstellung und einer an einem Ventilsitz anliegenden Schließstellung verschieblich geführt ist.

Aus der GB 2 105 012 A kennt man bereits ein Rückflussverhindererventil, dessen als Basiselement dienendes Ventilgehäuse mit einer Zuströmseite voraus in einer Ventilaufnahme eines Sanitärarmaturenkörpers einsetzbar ist. Im Ventilgehäuse ist ein Ventilkörper vorgesehen, der gegen die Kraft einer Rückstellfeder von einer Schließstellung in Offenstellung bewegbar ist. Auf der Abströmseite des Ventilkörpers ist dazu ein Führungszapfen einstückig angeformt, der in einem zentralen Führungslager verschieblich geführt ist. Während der Führungszapfen in der Schließstellung mit seinem freien Zapfenende sich im Inneren des Führungslagers befindet, steht der Führungszapfen in der vom anströmenden Wasser bewirkten Offenstellung über das Führungslager vor. Während das in der Ventilaufnahme befindliche Ventilgehäuse in der Offenstellung des Rückflussverhindererventils regelmäßig nicht zugänglich ist, ist das Ventilgehäuse in der Schließstellung nur schwer aus der Ventilaufnahme zu entfernen.

Die Aufgabe der vorliegenden Erfindung besteht somit darin, ein Rückflussverhindererventil der eingangs genannten Art so zu verbessern, dass es einfacher und zerstörungsfrei aus der Ventilaufnahme entnommen werden kann, wobei das Ventilelement dieses Rückflussverhindererventils im Basiselement mit nur geringer Reibung im wesentlichen geräuschfrei geführt sein soll.

Die erfindungsgemäße Lösung dieser Aufgabe besteht darin,
- dass das Rückflussverhindererventil sowohl einen zum stromaufwärts als auch zum stromabwärts gerichteten Ende einen Führungszapfen zur Führung des Ventilelements in einem zugeordneten Führungslager im Basiselement aufweist,
- dass zumindest der am Ventilelement stromaufwärts vorgesehene Führungszapfen in Schließstellung des Rückflussverhindererventils über die zugeordnete Führungsöffnung des Basiselements hinaus übersteht,
- dass der über die Führungsöffnung überstehende Zapfen-Fortsatz als Koppelelement ausgebildet ist,
- dass das Ventilelement mittels einer Druckfeder an den Dichtsitz dicht angedrückt ist,
- dass das Koppelelement im Zustand ohne Wasserdruck über die stromaufwärts zu richtende Stirnseite des Ventilelements hinaus übersteht und
- einen Überstand bildet, an dem das Rückflussverhindererventil manuell oder mit einem geeigneten Werkzeug ergriffen werden kann.

Somit steht zumindest über die am Ventilelement stromaufwärts zu richtende Stirnseite des Ventilelements hinaus ein Koppelelement über. Der Überstand kann von außen beispielsweise manuell oder mit einem geeigneten Werkzeug, beispielsweise mit einer Spitzzange, gefasst werden, sodass der komplette Ventileinsatz aus der Ventilaufnahme herausgezogen werden kann. Soweit dabei der nach außen stehende Überstand durch die Wirkung des Werkzeugs leicht verformt oder sonst wie beschädigt wird, ist dies für die Dichtfunktion des Rückflussverhindererventils ohne Belang, sodass es nach dem Herausziehen und einer Reinigung dennoch wieder eingesetzt werden kann.

Das erfindungsgemäße Rückflussverhindererventil weist sowohl einen zum stromaufwärts als auch zum stromabwärts gerichteten Ende erstreckenden Führungszapfen zur Führung des Ventilelements im Basiselement auf. Da am Ventilelement somit beidseits Führungszapfen vorgesehen sind, wird unerwünschten Slip- und Stickeffekten entgegengewirkt, die sich durch eine ungleichmäßige Gewichtsverteilung des Ventilelements ergeben können. Der am Ventilelement stromaufwärts vorgesehene Führungszapfen steht in Schließstellung über die zugeordnete Führungsöffnung vor. Da somit der am stromaufwärts vorgesehenen Führungszapfen befindliche Zapfen-Fortsatz als Koppelelement dient, kann das erfindungsgemäße Rückflussverhindererventil am Koppelelement ergriffen werden, ohne dass das Ventilelement aus seiner Schließstellung am Ventilsitz bewegt wird. In dieser Schließstellung wird das Ventilelement mittels der Druckfeder fest gegen den Ventilsitz gepresst.

Möglich ist auch, dass auch der am Ventilelement stromabwärts vorgesehene Führungszapfen in Schließstellung des Rückflussverhindererventils über die zugeordnete Führungsöffnung des Basiselements hinaus übersteht.

Zwar wird ein solcher Ventileinsatz üblicherweise mit seiner stromabwärts gelegenen Stirnseite voraus in den als Ventilaufnahme bestimmten Kanalabschnitt des Leitungskanals eingesetzt, sodass das auf das Rückflussverhindererventil einwirkende Fluid diesen Ventileinsatz nicht nur von seiner Schließstellung in die Offenstellung bewegen kann, sondern diesen Ventileinsatz auch stärker in den vorgesehenen Kanalabschnitt drückt. Bei lagerichtiger Einbauweise bietet daher ein zusätzlich oder stattdessen an der abströmseitig gelegenen Stirnseite des Ventilelements vorstehendes Koppelelement zwar keine Vorteile. Wird jedoch beim Einbau das Rückflussverhindererventil versehentlich falsch herum eingesetzt, kann es über dieses an der stromabwärts zu richtenden Stirnseite vorstehende Koppelelement gegriffen werden, sodass man das Rückflussverhindererventil noch einmal entnehmen und nun lagerichtig einsetzen kann.

Das zumindest an der stromaufwärts zu richtenden Stirnseite vorgesehene Koppelelement kann beispielsweise auch als eine an das Ventilelement angeformte Lasche ausgebildet sein. Eine bevorzugte Weiterbildung gemäß der Erfindung sieht jedoch vor, dass ein Zapfen zumindest über die stromaufwärts zu richtende Stirnseite des Ventilelements hinaus übersteht, wobei zumindest einer dieser Zapfen auch als Koppelelement ausgestaltet ist. Ein solcher, an der Stirnseite des Ventilelements vorzugsweise etwa mittig vorstehender Zapfen ist ausreichend stabil, um auch größere Kräfte auf das im Basiselement verschieblich gehaltene Ventilelement zu übertragen.

Besonders vorteilhaft ist es, wenn der am Ventilelement stromaufwärts und/oder stromabwärts vorgesehene Zapfen auch als Führungszapfen dient, der in einer Führungsöffnung des Basiselements und insbesondere eines im Basiselement vorgesehen Führungslagers verschieblich gelagert ist.

Dabei sieht eine besonders vorteilhafte Ausführungsform gemäß der Erfindung vor, dass der am Ventilelement stromaufwärts und/oder stromabwärts vorgesehene Führungszapfen über die zugeordnete Führungsöffnung des Basiselements hinaus übersteht/überstehen und dass der/die Zapfen und insbesondere dessen/deren über die zugeordnete Führungsöffnung überstehender Zapfen-Fortsatz als Koppelelement ausgebildet ist/sind.

Eine bevorzugte Ausführungsform gemäß der Erfindung sieht vor, dass das Ventilelement über eine Feder am Basiselement abgestützt ist, dass die Feder das Ventilelement in der Schließstellung des Rückflussverhindererventils hält und dass das Ventilelement durch den Druck des anströmenden Fluids von der Schließstellung gegen die Rückstellkraft der Feder in die Offenstellung bewegbar ist.

Damit das im Basiselement verschieblich geführte Ventilelement in Schließstellung des Rückflussverhindererventils flüssigkeitsdicht gegen den Ventilsitz gepresst wird, ist es vorteilhaft, wenn die Feder als Druckfeder ausgestaltet ist.

Eine besonders einfache und leicht herstellbare Ausführungsform gemäß der Erfindung sieht vor, dass der/die Zapfen zylindrisch ausgestaltet ist/sind.

Möglich ist aber auch, dass sich der die Führungsöffnung umgrenzende Wandungsabschnitt einerseits und der Führungszapfen andererseits nur linienförmig berühren und dass dazu, der Führungszapfen oder die Führungsöffnung einen runden Querschnitt und das jeweils andere Bauteil einen mehreckigen und insbesondere einen sechseckigen Querschnitt aufweisen.

Damit das im Basiselement verschieblich geführte Ventilelement den Ventilsitz in Schließstellung besonders gut und flüssigkeitsdicht verschließen kann, ist es vorteilhaft, dass der Ventilsitz von zumindest einem umlaufenden Dichtvorsprung umgrenzt ist, an welchem Dichtvorsprung das Ventilelement in Schließstellung des Rückflussverhindererventils mit seiner Dichtfläche dicht anliegt.

Weiterbildungen gemäß der Erfindung ergeben sich aus den Ansprüchen in Verbindung mit der Beschreibung sowie der Zeichnung. Nachstehend wird die Erfindung anhand bevorzugter Ausführungsbeispiele noch näher beschrieben.

Es zeigt:
- Fig. 1: ein im Längsschnitt gezeigtes Rückflussverhindererventil mit einem Ventilelement, das sowohl an seiner stromaufwärts als auch an seiner stromabwärts zu richtenden Stirnseite einen, in einer Führungsöffnung eines Führungslagers verschieblich geführten Führungszapfen trägt, wobei der über die stromaufwärts gelegene Führungsöffnung überstehenden Zapfen-Fortsatz auch hier als Koppelelement dient,
- Fig. 2: das Rückflussverhindererventil aus Figur 1 in einer Seitenansicht, und
- Fig. 3: das Rückflussverhindererventil aus den Figuren 1 und 2 in einer perspektivischen Unteransicht auf die Zuströmseite dieses Rückflussverhindererventils.

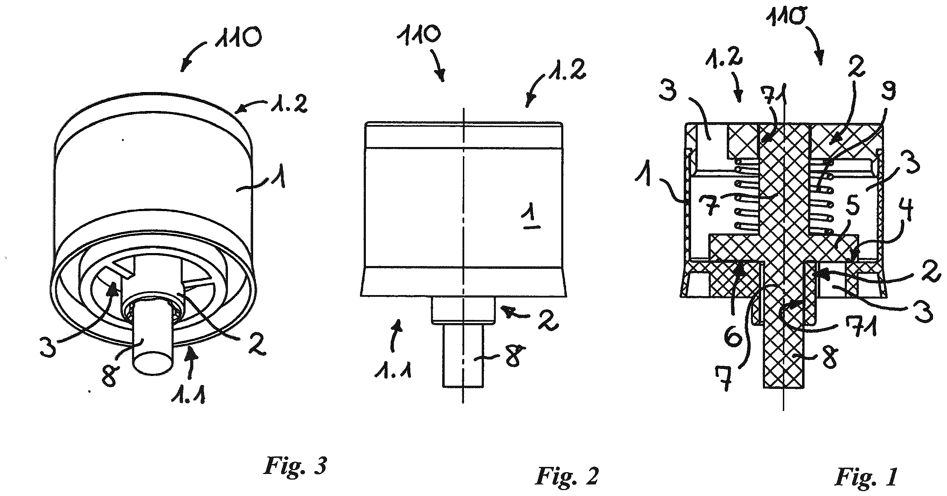

Die Figuren 1 bis 3 zeigen ein Rückflussverhindererventil 110. Das hier gezeigte Rückflussverhindererventile 110 hat ein Basiselement 1, das zugleich das hier auch als Einsetzpatrone ausgebildete Außengehäuse bildet. Das Basiselement 1 umschließt einen inneren Fließkanal 3, der sich zwischen einer stromaufwärts gerichteten Stirnseite 1.1 und stromabwärts gerichteten Stirnseite 1.2 erstreckt und der sich an einem Ventilsitz 4 erweitert.

In dem durch das Basiselement 1 führenden Fließkanal 3 ist ein Ventilelement 5 verschieblich geführt, das eine zur dichten Anlage am Ventilsitz 4 bestimmte Dichtfläche 6 hat und über eine Feder 9 am Basiselement 1 abgestützt ist.

Wie aus einem Vergleich der Figuren 1 bis 3 deutlich wird, haben die Rückflussverhindererventile 110 beidseits einen Führungszapfen 7. Um unerwünschten Slip- und Stickeffekten entgegenzuwirken, die sich durch die ungleichmäßige Gewichtsverteilung des Ventilelements 5 ergeben können, sind am Ventilelement 5 des in den Figuren 1 bis 3 dargestellten Rückflussverhindererventils 110 beidseits Führungszapfen 7 vorgesehen, die sich sowohl zum stromabwärts gerichteten Ende als auch zu dem stromaufwärts zu richtenden Ende des Ventilelements 5 erstrecken und die jeweils in einer Führungsöffnung 71 im Basiselement 1 und insbesondere eines im Basiselement 1 vorgesehenen Führungslagers 2 verschieblich geführt sind.

Das Rückflussverhindererventil 110 ist in einem durchmessererweiterten Kanalabschnitt des Leitungskanals einsetzbar, bis ein Absatz die Einsetzbewegung der Rückflussverhindererventile 110 begrenzt, welcher Absatz der Festlegung dieser Rückflussverhindererventiles 110 dient und am Übergang zwischen dem Leitungskanal und seinem querschnittserweiterten Kanalabschnitt gebildet ist.

Im Inneren des Basiselements 1 erstreckt sich ein Fließkanal 3, der sich in der Mitte erweitert. Am Übergang des Fließkanals 3 zu seinem querschnittserweiterten Kanalabschnitt ist ein Dichtsitz 4 ausgebildet. Das Ventilelement 5 ist im Basiselement 1 verschiebbar gelagert. Es wird mittels einer hier als Druckfeder ausgebildeten Feder 9 an den Dichtsitz 4 dicht angedrückt. Dabei kann die stromaufwärts gelegene Dichtfläche 6 des Ventilelements 5 entweder kegelförmig ausgebildet oder beispielsweise auch - wie dies in den Figuren 1 bis 3 gezeigt ist - plan ausgestaltet sein. Die Strömung in der vorgesehenen Fließrichtung drückt das Ventilelement 5 aus der hier gezeigten Schließstellung der Rückflussverhinderers 110 gegen die Kraft der Feder 73 zurück und öffnet den Fließweg im Rückflussverhindererventil 110. Bei einer umgekehrten Strömungsrichtung hingegen wird das Ventilelement 5 stärker an oder gar in den Dichtsitz 4 gedrückt und sperrt den Durchfluss. Da das hier gezeigte Rückflussverhindererventil 110 vergleichsweise klein ausgestaltet ist und auch in engen Leitungsquerschnitten platziert werden kann, ist dieses Rückflussverhindererventil meist nur schwer zugänglich. Um nun in dieser schwer zugänglichen Position eine Eingriffsmöglichkeit zu bieten, ist zumindest an dem stromaufwärts zu richtenden Stirnende des im Basiselement 1 gefangenen Ventilelements 5 ein Koppelelement 8 vorgesehen. Das über die stromaufwärts zu richtende Stirnseite des Ventilelements 5 hinaus überstehende Koppelelement 8 bildet einen Überstand, an dem das Rückflussverhindererventil 110 manuell oder mit einem geeigneten Werkzeug, beispielsweise mit einem Zangenwerkzeug, gegriffen werden kann. Dieser Überstand ist ausreichend, um das Rückflussverhindererventil 110 dort zu ergreifen und es aus dem als Verteileraufnahme dienenden Kanalabschnitt 21 herauszuziehen.

Wie die Figuren 1 bis 3 zeigen, steht über die stromaufwärts und die stromabwärts zu richtende Stirnseite der Dichtfläche 6 des Ventilelements 5 jeweils ein Führungszapfen 7 über, der in einer zugeordneten Führungsöffnung 71 eines Führungslagers 2 verschieblich geführt ist. Der hier stromaufwärts gelegenen Führungszapfen 7 des Rückflussverhindererventils 110 steht über die zugeordnete Führungsöffnung 71 des Basiselements 1 über, wobei der über die zugeordnete Führungsöffnung 71 überstehende Zapfen-Fortsatz als Koppelelement 8 ausgebildet ist. Der als Koppelelement 8 dienende Zapfen-Fortsatz steht somit über die stromaufwärts zu richtende Dichtfläche 6 des Ventilelements 5 und insbesondere auch über die stromaufwärts gelegene Stirnseite des Basiselements 1 derart über, dass dieses Koppelelement dort gut ergriffen werden kann.

In den Figuren 1 bis 3 ist dargestellt, dass die Führungszapfen 7 hier zylindrisch ausgestaltet sind. Die Feder 9 des Rückflussverhinderers 110 ist hier als Druckfeder ausgestaltet. Diese Druckfeder 9 hält das Ventilelement 5 in der Schließstellung des Rückflussverhindererventils 110 und ist durch den Druck des anströmenden Fluids von der Schließstellung gegen die Rückstellkraft der Feder 9 in die Offenstellung bewegbar.

### Bezugszeichenliste

- 1: Basiselement
- 1.1: stromaufwärts gerichtete Stirnseite
- 1.2: stromabwärts gerichtete Stirnseite
- 2: Führungslager
- 3: Fließkanal
- 4: Ventilsitz
- 5: Ventilelement
- 6: Dichtfläche
- 7: Führungszapfen
- 8: Koppelelement
- 9: Feder
- 71: Führungsöffnung
- 74: Dichtvorsprung
- 110: Rückflussverhindererventil (gemäß den Figuren 1 bis 3)

## Patentansprüche

1. Sanitäres Rückflussverhindererventil (110), mit:
- einem Basiselement (1), das zum Einsatz in eine Ventilaufnahme eines Sanitärarmaturenkörpers oder einer wasserführenden Leitung bestimmt ist und das ein Führungslager (2) sowie wenigstens einen inneren Fließkanal (3) hat, der sich zwischen einer stromaufwärts zu richtenden Stirnseite (1.1) und einer stromabwärts zu richtenden Stirnseite (1.2) erstreckt und der sich an einem Ventilsitz (4) erweitert,
- und mit einem Ventilelement (5), das eine Dichtfläche (6) zur Anlage an dem Ventilsitz (4) hat sowie einen sich zum stromaufwärts und stromabwärts gerichteten Ende des Ventilelements erstreckenden Führungszapfen (7) zur Führung des Ventilelements (5) im Führungslager (2) aufweist,
- wobei der Führungszapfen (7) über eine zugeordnete Führungsöffnung (71) des Basiselements (1) hinaus übersteht, **dadurch gekennzeichnet, dass** der Führungszapfen (7) zumindest stromaufwärts in Schließstellung des Rückflussverhindererventils (110) mit einem Zapfen-Fortsatz über die Führungsöffnung (71) hinaus übersteht, dass zumindest der stromaufwärts vorgesehene Zapfen-Fortsatz als Koppelelement (8) ausgebildet ist,dass das Ventilelement (5) mittels einer Druckfeder (9) an den Dichtsitz (4) dicht angedrückt ist und dabei das Koppelelement (8) über die stromaufwärts zu richtende Stirnseite des Ventilelements (5) hinaus übersteht, und dass das Rückflussverhindererventil (110) dort manuell oder mit einem geeigneten Werkzeug ergriffen werden kann.

2. Rückflussverhindererventil nach Anspruch 1, **dadurch gekennzeichnet, dass** die Druckfeder (9) am Basiselement (1) abgestützt ist.

3. Rückflussverhindererventil nach Anspruch 1 oder 2, **dadurch gekennzeichnet, dass** der Führungszapfen (7) im Führungslager (2) verschieblich gelagert ist.

4. Rückflussverhindererventil nach einem der Ansprüche 1 bis 3, **dadurch gekennzeichnet, dass** das Koppelelement (8) über die stromaufwärts zu richtende Dichtfläche (6) des Ventilelements (5) hinaus übersteht.

5. Rückflussverhindererventil nach einem der Ansprüche 1 bis 4, **dadurch gekennzeichnet, dass** das Rückflussverhindererventil (110) zwei Koppelelemente (8) hat, die über die stromaufwärts und die stromabwärts gelegene Stirnseite des Basiselements (1) hinaus vorstehen.

6. Rückflussverhindererventil nach einem der Ansprüche 2 bis 5, **dadurch gekennzeichnet, dass** das Ventilelement (5) durch den Druck des anströmenden Fluids von der Schließstellung gegen die Rückstellkraft der Feder (9) in eine Offenstellung bewegbar ist.

7. Rückflussverhindererventil nach einem der Ansprüche 1 bis 6, **dadurch gekennzeichnet, dass** der Führungszapfen (7) zylindrisch ausgestaltet ist.

8. Rückflussverhindererventil nach einem der Ansprüche 1 bis 7, **dadurch gekennzeichnet, dass** der Führungszapfen (7) oder die Führungsöffnung (71) einen runden Querschnitt und das jeweils andere Bauteil (71 bzw. 7) einen sechseckigen Querschnitt aufweisen.

9. Rückflussverhindererventil nach einem der Ansprüche 1 bis 8, **dadurch gekennzeichnet, dass** der Ventilsitz von zumindest einem umlaufenden Dichtvorsprung umgrenzt ist, an welchem Dichtvorsprung das Ventilelement in Schließstellung des Rückflussverhindererventils mit seiner Dichtfläche dicht anliegt.

## Claims

1. Sanitary backflow prevention valve (110) having:
- a base element (1) which is specified for use in a valve receptacle of a sanitary fitting body or of a water-conducting line, and which has a guide bearing (2) as well as at least one internal flow duct (3) which extends between an end side (1.1) that is to be directed upstream and an end side (1.2) that is to be directed downstream and which widens at a valve seat (4); and having
- a valve element (5) which has a sealing face (6) for bearing on the valve seat (4), and a guide pin (7) which for guiding the valve element (5) in the guide bearing (2) extends to the end of the valve element that is directed upstream and downstream;
- wherein the guide pin (7) projects beyond an assigned guide opening (71) of the base element (1), **characterized in that** the guide pin (7) at least upstream, in the closed position of the backflow prevention valve (110), by way of a pin appendage projects beyond the guide opening (71), **in that** at least the pin appendage provided upstream is configured as a coupling element (8), **in that** the valve element (5) by means of a compression spring (9) is tightly pressed against the seal seat (4) and the coupling element (8) herein projects beyond the end side of the valve element (5) that is to be directed upstream, and **in that** the backflow prevention valve (110) there can be gripped manually or by a suitable tool.

2. Backflow prevention valve according to Claim 1, **characterized in that** the compression spring (9) is supported in the base element (1).

3. Backflow prevention valve according to Claim 1 or 2, **characterized in that** the guide pin (7) is mounted so as to be displaceable in the guide bearing (2).

4. Backflow prevention valve according to one of Claims 1 to 3, **characterized in that** the coupling element (8) projects beyond the sealing face (6) of the valve element (5) that is to be directed upstream.

5. Backflow prevention valve according to one of Claims 1 to 4, **characterized in that** the backflow prevention valve (110) has two coupling elements (8) which project beyond the end side of the base element (1) that is situated upstream and the end side of the base element (1) that is situated downstream.

6. Backflow prevention valve according to one of Claims 2 to 5, **characterized in that** the valve element (5) by way of the pressure of the inflowing fluid is movable counter to the restoring force of the spring (9) from the closed position to the open position.

7. Backflow prevention valve according to one of Claims 1 to 6, **characterized in that** the guide pin (7) is designed so as to be cylindrical.

8. Backflow prevention valve according to one of Claims 1 to 7, **characterized in that** the guide pin (7) or the guide opening (71) has a round cross section, and the respective other component (71 or 7, respectively) has a hexagonal cross section.

9. Backflow prevention valve according to one of Claims 1 to 8, **characterized in that** the valve seat is delimited by at least one encircling sealing projection, the valve element by way of the sealing face thereof, in the closed position of the backflow prevention valve, bearing tightly on said sealing protrusion.

## Revendications

1. Soupape d'anti-refoulement sanitaire (110), comprenant:
- un élément de base (1), qui est destiné à être utilisé dans un logement de soupape d'un corps de robinetterie sanitaire ou d'une conduite transportant de l'eau et qui comporte un palier de guidage (2) ainsi qu'au moins un canal d'écoulement intérieur (3), qui s'étend entre une face frontale (1.1) à orienter vers l'amont et une face frontale (1.2) à orienter vers l'aval et qui s'élargit au niveau d'un siège de soupape (4), et comprenant
- un élément de soupape (5), qui comporte une face d'étanchéité (6) à appliquer sur le siège de soupape (4) et qui présente un pivot de guidage (7) s'étendant vers l'extrémité orientée vers l'amont et vers l'aval de l'élément de soupape pour le guidage de l'élément de soupape (5) dans le palier de guidage (2),
- dans laquelle le pivot de guidage (7) est saillant au-delà d'une ouverture de guidage associée (71) de l'élément de base (1),
**caractérisée en ce que** le pivot de guidage (7) est saillant au moins vers l'amont, dans la position fermée de la soupape d'anti-refoulement (110), avec un prolongement de pivot au-delà de l'ouverture de guidage (71), **en ce qu'**au moins le prolongement de pivot prévu vers l'amont est formé par un élément de couplage (8), **en ce que** l'élément de soupape (5) est pressé de façon étanche sur le siège de soupape (4) au moyen d'un ressort de pression (9) et l'élément de couplage (8) est en l'occurrence saillant au-delà de la face frontale de l'élément de soupape (5) à orienter vers l'amont, et **en ce que** la soupape d'anti-refoulement (110) peut y être saisie à la main ou à l'aide d'un outil approprié.

2. Soupape d'anti-refoulement selon la revendication 1, **caractérisée en ce que** le ressort de pression (9) prend appui sur l'élément de base (1).

3. Soupape d'anti-refoulement selon la revendication 1 ou 2, **caractérisée en ce que** le pivot de guidage (7) est supporté dans le palier de guidage (2).

4. Soupape d'anti-refoulement selon l'une quelconque des revendications 1 à 3, **caractérisée en ce que** l'élément de couplage (8) est saillant au-delà de la face d'étanchéité (6) de l'élément de soupape (5) à orienter vers l'amont.

5. Soupape d'anti-refoulement selon l'une quelconque des revendications 1 à 4, **caractérisée en ce que** la soupape d'anti-refoulement (110) comporte deux éléments de couplage (8), qui sont saillants au-delà de la face frontale de l'élément de base (1) située à l'amont et située à l'aval.

6. Soupape d'anti-refoulement selon l'une quelconque des revendications 2 à 5, **caractérisée en ce que** l'élément de soupape (5) peut être déplacé par la pression du fluide entrant depuis la position de fermeture jusqu'à une position d'ouverture contre la force de rappel du ressort (9).

7. Soupape d'anti-refoulement selon l'une quelconque des revendications 1 à 6, **caractérisée en ce que** le pivot de guidage (7) est de forme cylindrique.

8. Soupape d'anti-refoulement selon l'une quelconque des revendications 1 à 7, **caractérisée en ce que** le pivot de guidage (7) ou l'ouverture de guidage (71) présente une section transversale ronde et l'autre pièce respective (71 ou 7) présente une section transversale hexagonale.

9. Soupape d'anti-refoulement selon l'une quelconque des revendications 1 à 8, **caractérisée en ce que** le siège de soupape est entouré par au moins une saillie d'étanchéité périphérique, saillie d'étanchéité périphérique sur laquelle l'élément de soupape s'applique de façon étanche avec sa face d'étanchéité dans la position de fermeture de la soupape d' anti-refoulement.
